Europäisches Patentamt

European Patent Office

Office européen des brevets

(11) Publication number: **0 120 623**
**B1**

# EUROPEAN PATENT SPECIFICATION

(45) Date of publication of patent specification: **11.10.89**

(51) Int. Cl.⁴: **B 29 D 30/08**

(21) Application number: **84301340.0**

(22) Date of filing: **01.03.84**

(54) Tire ply splice construction and method of making the same.

(30) Priority: **17.03.83 US 476071**

(43) Date of publication of application:
**03.10.84 Bulletin 84/40**

(45) Publication of the grant of the patent:
**11.10.89 Bulletin 89/41**

(84) Designated Contracting States:
**BE DE FR GB IT LU NL**

(56) References cited:
**FR-A-1 269 753**
**US-A-4 325 423**

(73) Proprietor: **GENCORP INC.**
**One General Street**
**Akron Ohio 44329 (US)**

(72) Inventor: **Reifsnyder, David**
**2300 West State Street**
**Alliance Ohio 44601 (US)**

(74) Representative: **Paget, Hugh Charles Edward et al**
**MEWBURN ELLIS & CO. 2/3 Cursitor Street**
**London EC4A 1BQ (GB)**

Courier Press, Leamington Spa, England.

## Description

Background of the invention
Field of the invention

This invention relates to radial tire building and, more particulary, to an improved method of splicing one end of the radial ply fabric layer to the other end to form an annular layer of ply stock.

Description of the prior art

In the construction of radial ply tires, a carcass consisting of one or more plies of elastomericized fabric is built upon a generally cylindrical drum by applying layers of fabric with cords running perpendicular or in a near perpendicualar direction to the edge of the fabric layer. The ply fabric is applied so that the cords run from bead to bead in a direction which is generally parallel to the axis of the drum. Thereafter, the layers of fabric plies are secured by turning the side edges of the plies around a coil of bead wire. The sidewall portions are then applied to the carcass. The carcass is then shaped to the required toroidal form, after which breaker and tread portions are applied to the crown portion of the carcass. After the components are applied they are stitched into place. Then the tire is placed in a suitable mold and is cured.

As each layer of ply stock is wrapped around the carcass, a splice is formed between the ends of the layers in order for the ply layer to achieve an annular shape. This splice is formed in a direction generally parallel to the direction of the cords in the fabric, i.e., in the direction generally parallel to the axis of the drum. To keep the ply splice from opening up or slipping open during assembly, one end of the ply fabric typically overlaps the other end a short distance. This overlapping, or lap splicing, is the traditional and accepted method of placing fabric plies on a tire carcass. The overlap is usually confined to a short distance, and usually only involves a few ply cords. The distance of a typical overlap may be approximately 0.07 to 0.5 inch (1.8 to 12.7 mm).

The resulting overlapping splice results in an area of the tire in which the ply reinforcement is increased. Since the double layer of cords in the overlapping splice area exhibit a different tension from the remaining single layer of carcass cords, there is less cord elongation in the sidewall in the area of the splice. This results in sidewall indentations in the inflated tire.

In an effort to eliminate these indentations, various other splicing methods have been developed. One such method is a reinforced butt splice which involves having the ends of the ply layer abut each other so that no overlapping occurs, and reinforcing the splice with a strip of another material. The reinforcing strip may be, for example, a gum strip made of a rubber-like material or a woven material. A major disadvantage of this reinforced butt splice is that it introduces an additional material into the tire, and the interaction of this material with the existing tire material may produce detrimental results. In addition, the reinforcement adds to the weight of the tire and increases material cost.

Another method of splicing involves cutting the cords in one of the overlapping layers of the splice to prevent the overlapping layer from providing additional reinforcement. This method, however, does not eliminate the extra layers of fabric which result from lap splicing. In particular, extra ply stock material is still provided under the bead, which can result in reinforcement to this area of the ply stock.

Summary of the invention

The object of the present invention is to provide a method for splicing radial fabric plies which eliminates sidewall indentations while avoiding the necessity of introducing an additional material in the tire.

This object is achieved in accordance with the present invention by a method of making a radial ply pnematic tire as defined in claim 1 and by a radial ply pneumatic tire as defined in claim 7.

In accordance with the present invention, at least one end portion of a radial ply fabric layer has a portion removed in the area in which the beads are placed. Between the beads, the end portions overlap to form a lap splice. However, because of the removed material in the bead areas, the cords in at least one of the overlapping end portions are not connected around the beads, and thus they do not provide the additional reinforcement which can result in sidewall indentations.

The present invention avoids the necessity of introducing an additional material in the tire, as was necessary with reinforced butt splicing. The advantages of butt splicing are achieved in the area in which the plies are wrapped around the beads, and the advantages of lap splicing are achieved in the area between the beads so that the splice is unlikely to open up during assembly.

In the method of the present invention, a layer of ply stock is placed on a tire carcass with the sides of the ply layer extending outwardly to the area of bead placement. One end of the ply layer is spliced with the other end of the ply layer to form an annular layer of ply stock. The ends overlap each other along a substantial portion of the splice. Material is removed from one end or both end portions of the ply layer in the areas that are designed to wrap around the beads. This is done in such a manner that the end edges of the ply around the beads abut each other. Thereafter, the construction of the tire is completed in accordance with conventional methods. The steps of the method may be repeated for additional layers of ply stock.

Preferably, the width of the portion of ply stock removed is approximately the same as the width of the overlap of the ends of the ply layer. The method of the present invention is especially adapted to the construction of radial tires, in which the ply layer is placed on the carcass with cords extending from side to side.

The method of the present invention may be employed to provide a radial ply pneumatic tire which comprises a tread portion extending circumferentially around the tire. Two annular bead portions are provided which have beads embedded therein. A pair of flexible sidewall portions are provided along the sides of the tire. Each sidewall portion connects one side of the tread portion with the associated bead portion. A plurality of layers of carcass plies extend through the sidewall portions. Each ply layer is folded around the beads so that the end portions of the plies are located in the sidewall portions. The ends of the plies are spliced together to form a generally annular shape. The ends overlap each other along a substantial portion of the splice. A portion of one end is cut away in the areas in which the ply layer is folded around the beads to form a splice in which the ends abut each other.

Brief description of the drawings

In the drawings, which are not drawn to scale:

Fig. 1 is an elevational view of two ends of a ply layer prior to splicing the ply layer ends toghether to form an annular shape;

Fig. 2 is an elevational view similar to Fig. 1, with the ends of the ply layer in place and spliced together;

Fig. 3 is an elevational view similar to Fig. 2, showing another embodiment of the present invention; and

Fig. 4 is a perspective view of a portion of a pneumatic tire formed in accordance with the method of the present invention.

Description of the preferred embodiment

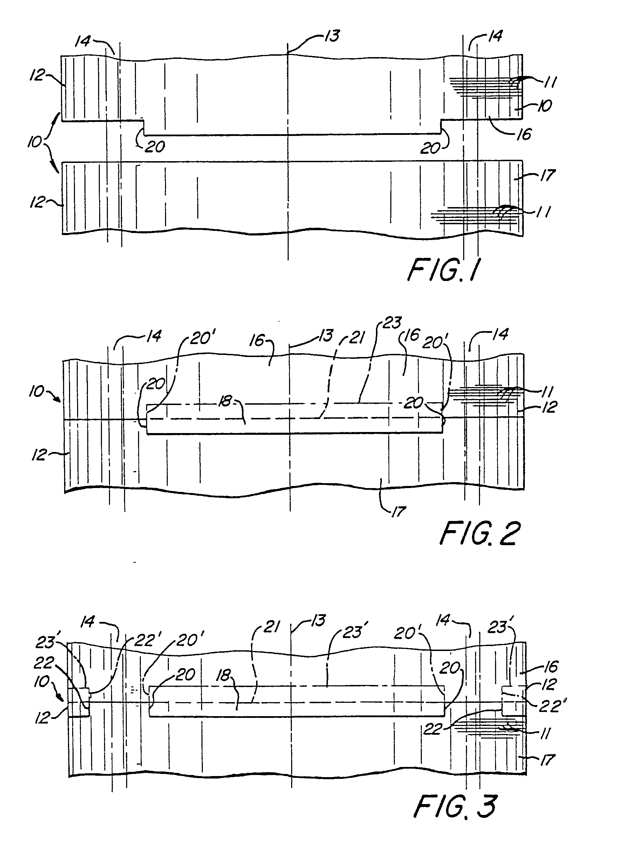

Referring more particularly to the drawings, and initially to Figs. 1 and 2, there is shown a layer 10 of carcass ply fabric. The ply layer 10 may be of any conventional fabric used in the construction of radial tires, such as steel or polyester. The ply layer 10 comprises cords 11 extending between the two sides 12 of the layer. The ply layer 10 is centered on the centerline 13 of a tire carcass on a conventional building drum. The sides 12 of the ply layer 10 extend outwardly from the centerline 13 beyond the areas 14 of bead placement to the outer edge of the drum.

When the ply layer 10 is wrapped around the building drum, the two ends 16 and 17 of the ply layer adjoin each other as the ply layer forms an annular shape. In accordance with conventional methods, the two ply ends 16 and 17 are overlapped in a small area 18 to form a conventional lap splice. The overlapping of the material in the area 18 is necessary to keep the ply splice from opening up or slipping open during assembly. However, if the double ply layer in the area 18 were to extend completely across the ply stock from edge to edge, as is the conventional practice, there would be a different cord tension from that provided by the single layer of other cords in the ply layer 10. As a result, there is less cord elongation in the sidewall area of the splice, and sidewall indentations are formed in the inflated tire.

In accordance with the present invention, a pair of cuts 20 are formed in one end 16 of the ply layer 10. The cuts 20 are made generally transversly to the end edge of the ply layer 10. A strip of ply material is then removed outwardly from each cut 20 toward the adjacent side 12 of the ply layer. As shown in Figs. 1 and 2, the strip of removed ply material extends outwardly from the cut 20 all the way to the side 12.

When the ends 16 and 17 of the ply layer are overlapped to form a splice, as shown in Fig. 2, a conventional overlapping splice is formed only in the central portion of the carcass between the two areas 14 of bead placement. More specifically, the overlapping area 18 extends only between the two transverse cuts 20, with the edge of the overlapped end 17 indicated by dotted line 21. Outwardly from each of the cuts 20, a butt splice is formed in which the edges of the two ply ends 16 and 17 abut each other. As a result, the cords 11 in the overlapping area 18 of the end 16 are not wrapped around the beads and have minimal tension during inflation. This helps to minimize the elongation differential between the cords at the splice and the other cords in the ply layer 10, and thus helps to reduce or eliminate sidewall indentations in the inflated tire.

The length and width of the removed portion of ply material at the splice can vary with tire size, design, and type of fabric. As shown in Figs. 1 and 2, the length of the removed strip on each side of the ply layer is slightly greater than the distance from the bead placement area 14 to the ply side 12. The width of the removed strip is approximately the same as the width of the overlapping area 18. In Fig. 2, the width of the overlapping area 18 is approximately equal to four cords 11, so that the width of the strip removed from each side of the ply end 16 is also approximately equal to four cords. The width of the conventional ply overlap area 18 may be approximately 0.15 inch to 0.5 inch (3.8 to 12.7 mm), with a width of 0.2 inch (5.1 mm) being tyical. Accordingly, the width of the removed strip can be any where from about 0.15 inch (3.8 mm) to about 0.5 inch (12.7 mm), and typically is about 0.2 inch (5.1 mm).

Alternatively, the same basic splice construction can be made by making cuts 20' in the ply end 17 as well as cuts 20 in the ply end 16, as shown in chain lines in Fig. 2. Material is then removed from the side edge portions of the end 17. The ends 16 and 17 still form a butt splice in the bead areas where material has been removed, but the ply end 17 now extends to chain line 23 (Fig. 2). Of course, to create the same width of overlap area 18, the width of the strips removed from both ply ends would be only half what they would be if material were removed from only one ply end.

While it is easiest to remove the strip of material from each cut 20 to the adjacent side 12, it may be advantageous to leave an overlapping portion adjacent to the side 12, as shown in Fig. 3. In accordance with this method, a pair of additional cuts 22 are made in the end 16 on the other side of the bead placement areas 14 from the cut 20. The length of each cut 22 is the same as the length of each cut 20. The strip of ply material is then removed from the end 16 only between the cuts 20 and 22. As before, the width of removed strip is approximately equal to the width of the area 18 of overlap between the ply ends, so that a butt splice is formed between the cuts 20 and 22. Thus, the advantage of a butt splice under the beads is achieved, while additional material is provided on the sides of the ply layer 10 to assist in turning the layers of ply material over the bead during the later fabrication of the tire. Again this splice construction may also be obtained by making cuts 22', shown in chain lines in Fig. 3, and removing material from both ply ends 16 and 17. The ends of the overlapped ply 17 would then extend to chain lines 23' (Fig. 3).

Additional ply layers may be spliced in the same manner, with one end of the ply layer cut and a strip of ply material removed from beneath the area of bead placement.

After all of the ply layers are formed, the construction of the tire is completed in accordance with conventional practice. The beads are placed in the areas 14 on each side of the tire carcass over the ply layers. The ply layers are then wrapped around the beads in the conventional manner. The tire carcass is expanded to a toroidal shape, and the breaker, tread and sidewall portions are applied circumferentially around the carcass. The tire is then placed in a suitable mold and cured.

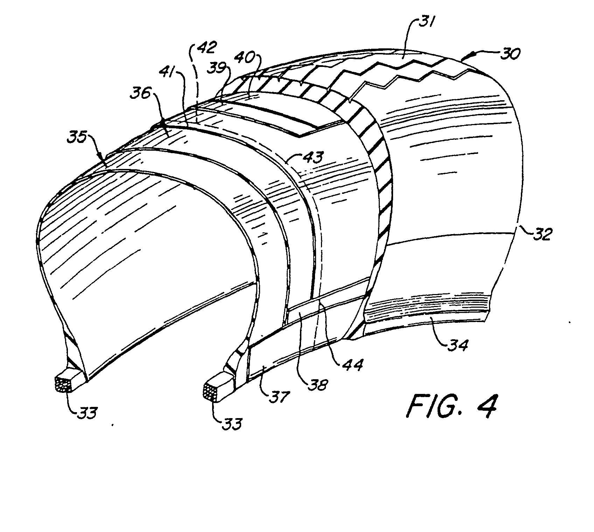

In Fig. 4, there is shown a finished pneumatic tire 30 made using the splice shown in Figs. 1 and 2. The tire 30 has a thick tread portion 31 which extends circumferentially around the tire and sidewalls 32 which extend from the tread portion 31 along the sides of the tire. The tire 30 is designed to be mounted on a conventional wheel rim, and wire beads 33 are provided in the bead portion 34 of the tire where the sidewall meets the rim. The tire 30 has two carcass plies 35 and 36 extending around the interior of the tire. The plies extend from bead to bead and are folded around the beads 33 so that the sides 37 and 38 of the plies are located in the sidewall region. There are also two breakers 39 and 40 extending circumferentially around the interior of the tire and located directly inwardly of the tread portion 31. Conventional rubber compositions are used to form the treads and sidewall portions of the tire and the air-retaining inner liner.

Each of the plies 35 and 36 is formed of a single layer of ply fabric which is spliced together to form an annular shape. Each of the plies 35 and 36 is identically formed, and both will be described with reference to the ply 36. The splice is formed in the ply 36 and with one end 41 of the ply overlapping the other end 42 along a substantial portion of the splice forming a lap splice 43.

A radially extending strip of ply material is removed from one end 41 of the ply layer 36 from a point directly inwardly and above the beads 33 to the side 38 of the ply layer. The ends 41 and 42 thus abut each other in the area in which the ply ends are wrapped around the beads 33 and in the sidewall regions in which the side 38 of the ply is located to form a butt splice 44. Therefor, there is only a single layer of the ply 36 wrapped around each bead 33. Likewise, there is only a single layer of the ply 35 wrapped beneath such bead 33 in the area in which the ends of the ply 35 are spliced together.

It will be noted that in the finished tire, the absence of an overlapping area beneath the beads prevents the overlapping end 41 of the ply 36 from forming additional reinforcements which would result in reduced tension in the radial plies in the area of the splice. This lack of reduced tensioning results in substantial reduction or elimination of sidewall indentations which otherwise occur in the area in which the plies overlap to form a splice.

The invention as shown herein is applied to conventional radial tire construction; however, it is understood that the invention may be applied for use with other standard designs of tires.

## Claims

1. A method of making a radial ply pneumatic tire, which comprises the steps of:

(a) placing a layer of ply stock having parallel cords (11) on a tire carcass with the sides (12) of the ply layer extending outwardly to the areas (14) of bead placement and the parallel cords (11) extending across the sides of the ply layer in a direction that becomes radial when the tire carcass is expanded to a toroidal shape;

(b) splicing one end (16) of the ply layer with the other end (17) of the ply layer to form an annular layer of ply stock, the ends overlapping each other along a substantial portion (18) of the splice;

(c) removing a portion (20) of ply stock including sections of the parallel cords from one end of the ply layer at least in the areas (14) in which the respective beads are placed to form a splice in said areas in which the end edges of the ply layer abut each other; and

(d) completing the construction of the tire.

2. A method according to claim 1, wherein steps (a) through (c) are repeated for additional layers of ply stock.

3. A method according to claim 1 or claim 2, wherein the width of the portion of ply stock removed is approximately the same as the width of the overlap.

4. A method according to any one of the preceding claims, wherein the portion of ply stock is removed from the areas in which the respective beads are placed to the respective adjacent sides of the ply layer.

5. A method according to claim 1, claim 2 or claim 3, wherein the portion of ply stock is removed only in the areas in which the beads are placed and the ends are overlapped in the respective regions between the bead placement areas and the respective adjacent sides of the ply layer.

6. A method according to any one of the preceding claims, wherein a portion of ply stock including sections of the parallel cords is removed from both ends of the ply layer at least in the areas in which the respective beads are placed to form a splice in said areas in which the end edges of the ply layer abut each other.

7. A radial ply pneumatic tire which comprises:
a tread portion (31) extending circumferentially around the tire;
two annular bead portions (34) having bead (33) embedded therein;
a pair of flexible sidewall portions (32) along the sides of the tire, each sidewall portion (32) connecting one side of the tread portion (31) with the associated bead portion (34); and
a ply layer (35, 36) having radial cords extending through the sidewall portions, said ply layer folded around the beads (33) so that the side portions of the ply layer are located in the sidewall portions (32), the end portions of said ply layer being spliced together to form a generally annular shape, the end portions overlapping each other along a substantial portion of the splice, and at least one of said end portions having parts including sections of the radial cords cut away in the areas in which the ply layer is folded around the repective beads, the end edges of the ply layer abutting each other in said areas.

8. A radial ply pneumatic tire according to claim 7, wherein the widths of the parts of the end portion that are cut away are approximately the same as the width of the overlap between the end portions.

9. A radial ply pneumatic tire according to claim 7 or claim 8, wherein the cut-away parts of said end portion of the ply extend from the areas in which the ply layer is folded around the respective beads to the respective adjacent sides of the ply layer.

10. A pneumatic tire according to claim 7 or claim 8, wherein both of said end portions have parts including sections of the radial cords cut away in the areas in which the ply layer is folded around the respective beads to form a splice in said areas in which the end edges of the ply layer abut each other.

Patentansprüche

1. Verfahren zur Herstellung eines Radialgewebe-Luftreifens mit den Schritten:
(a) Anordnen einer Lage eines Gewebematerials, das parallele Fäden (11) aufweist, auf einer Reifenkarkasse, wobei sich die Seiten (12) der Gewebelage nach außen zu den Bereichen einer Wulstanordnung erstrecken und wobei sich die parallelen Fäden (11) über die Seiten der Lage in einer Richtung erstrecken, die radial wird, wenn die Reifenkarkasse ringförmig aufgeweitet wird;
(b) Verspleißen eines Endes (16) der Gewebelage mit dem anderen Ende (17) der Gewebelage, um eine ringförmige Lage aus Gewebematerial zu bilden, wobei sich die Enden längs eines wesentlichen Bereichs (18) der Verspleißung überlappen;

(c) Beseitigen eines Abschnitte der parallelen Fäden umfassenden Teils (20) des Gewebematerials von einem Ende der Gewebelage zumindest in denjenigen Bereichen (14), in denen die betreffenden Wülste angeordnet sind, um eine Verspleißung in diesen Bereichen zu bilden, in denen die Endränder der Gewebelage aneinanderstoßen; und
(d) Vervollständigen der Konstruktion des Reifens.

2. Verfahren nach Anspruch 1, wobie die Schritte (a) bis (c) für zusätzliche Gewebemateriallagen wiederholt werden.

3. Verfahren nach Anspruch 1 oder 2, wobei die Breite des beseitigten Teils der Gewebelage ungefähr der Breite der Überlappung entspricht.

4. Verfahren nach einem der vorhergehenden Ansprüche, wobei der Teil der Gewebelage von denjenigen Bereichen beseitigt wird, in denen die betreffenden Wülste an den zugeordneten benachbarten Seiten der Gewebelage angeordnet werden.

5. Verfahren nach Anspruch 1, 2 oder 3, wobei der Teil des Gewebematerials nur in denjenigen Abschnitten beseitigt wird, in denen die Wülste angeordnet werden, und wobei sich die Enden in den betreffenden Abschnitten zwischen den Wulstabschnitten und den zugeordneten benachbarten Seiten der Gewebelage überlappen.

6. Verfahren nach einem der vorhergehenden Ansprüche, wobei ein Abschnitte der parallelen Fäden aufweisender Teil des Gewebematerials von beiden Seiten der Gewebelage zumindest in denjenigen Abschnitten beseitigt wird, in denen die zugeordneten Wülste angeordnet werden, um in diesen Abschnitten eine Verspleißung zu bilden, in denen die Endränder der Gewebelage aneinanderstoßen.

7. Radialgewebe-Luftreifen, umfassend:
einen Laufflächenbereich (31), der sich in Umfangsrichtung um den Reifen herum erstreckt;
zwei ringförmige Wulstbereiche (34), in die ein Wulst (33) eingebettet ist;
zwei flexible Seitenwandbereiche (32) längs der seite des Reifens, wobei jeder Seitenwandbereich (32) eine Seite des Laufflächenbereichs (31) mit dem zugeordneten Wulstbereich (34) verbindet; und
eine Gewebelage (35, 36) mit radialen Fäden, die sich durch die Seitenwandbereiche erstrecken, wobei die Gewebelage um die Wülste (33) umgefaltet ist, so daß die Seitenbereiche der Gewebelage in den Seitenwandbereichen (32) angeordnet sind, wobei die Endbereiche dieser Gewebelage miteinander verspleißt sind, um im allgemeinen eine Ringform zu bilden, wobei sich die Endbereiche längs eines wesentlichen Bereichs der Verspleißung überlappen und wobei mindestens einer dieser Endbereiche Abschnitte der radialen Fäden aufweisende Teile hat, die in denjenigen Abschnitten weggeschnitten sind, in denen die Gewebelage um die betreffenden Wülste umgefaltet ist, wobei die Endränder der Gewebelage in diesen Abschnitten aneinanderstoßen.

8. Radialgewebe-Luftreifen nach Anspruch 7, wobei die Breite der weggeschnittenen Teile des Endbereichs ungefähr der Breite der Überlappung zwischen diesen Endbereichen entspricht.

9. Radialgewebe-Luftreifen nach Anspruch 7 oder 8, wobei sich die weggeschnittenen Teile des Endbereichs der Lage von denjenigen Abschnitten, in denen die Gewebelage um die betreffenden Wülste umgefaltet ist, zu den betreffenden benachbarten Seiten der Gewebelage erstreckt.

10. Luftreifen nach Anspruch 7 oder 8, wobei beide besagte Endbereiche Abschnitte der radiale Fäden aufweisenden Teile haben, die in denjenigen Flächenbereichen weggeschnitten sind, in denen die Gewebelage um die betreffenden Wülste umgefaltet ist, um in diesen Flächenbereichen eine Verspleißung zu bilden, in denen die Endränder der Gewebelage aneinanderstoßen.

**Revendications**

1. Procédé de fabrication d'un bandage pneumatique à nappes radiales, lequel procédé comprend les étapes qui consistent à:

(a) placer une couche de matière première de nappes comportant des câblés parallèles (11) sur une carcasse d'un bandage pneumatique, les côtés (12) de la couche de nappes s'étendant vers l'extérieur en direction des zones (13) de mise en place des talons, tandis que les câblés parallèles (11) s'étendent en travers des côtés de la couche de nappes dans une direction qui devient radiale lorsque la carcasse du bandage pneumatique est déployée en une forme toroïdale;

(b) épisser une extrémité (16) de la couche de nappes avec l'autre extrémité (17) de cette couche pour former une couche annulaire de la matière première des nappes, les extrémités se chevauchant mutuellement le long d'une importante partie (18) de l'épissure;

(c) enlever une partie (20) de la matière première des nappes comprenant des sections des câblés parallèles à partir d'une extrémité de la couche de nappes au moins dans les zones (14) dans lesquelles les talons respectifs sont placés pour former une épissure dans ces zones, où les bords extrêmes de la couche de nappes sont mutuellement en aboutement; et

(d) achever la confection du bandage pneumatique.

2. Procédé selon la revendication 1, dans lequel on répète les étapes (1) à (c) pour des couches supplémentaires de la matière première des nappes.

3. Procédé selon la revendication 1 ou 2, dans lequel la largeur de la partie de la matière première des nappes enlevée est à peu près la même que celle du chevauchement.

4. Procédé selon l'une quelconque des revendications précédentes, dans lequel la partie de la matière première des nappes est enlevée des zones dans lesquelles les talons respectifs sont placés sur les côtés adjacents respectifs de la couche de nappes.

5. Procédé selon la revendication 1, 2 ou 3, dans lequel la partie de la matière première des nappes est enlevée uniquement dans les zones dans lesquelles les talons sont situés, tandis que les extrémités se chevauchent dans les zones respectives situées entre les zones de mise en place des talons et les côtés adjacents respectifs de la couche de nappes.

6. Procédé selon l'une quelconque des revendications précédentes, dans lequel une partie de la matière première des nappes comprenant des sections des câblés parallèles, est enlevée des deux extrémités de la couche de nappes au moins dans les zones dans lesquelles les talons respectifs sont placés pour former une épissure dans ces zones où les bords extrêmes de la couche de nappes sont mutuellement en aboutement.

7. Bandage pneumatique à nappes radiales, comprenant

une partie de bande de roulement (31) s'étendant circonférentiellement autour du bandage pneumatique;

deux parties annulaires de talons (34) dans lesquels sont enrobés des talons (33);

deux parties de flancs flexibles (32) le long des côtés du bandage pneumatique, chaque partie de flanc (32) reliant un côté de la partie de bande de roulement (31) à la partie associée de talon (34); et

une couche de nappes (35, 36) comportant des câblés radiaux s'étendant à travers les parties de flancs, cette couche de nappes étant repliée autour des talons (33) de telle sorte que les parties latérales de la couche de nappes soient situées dans les parties de flancs 32, les parties extrêmes de la couche de nappes étant épissées pour former une configuration généralement annulaire, les parties extrêmes se chevauchant mutuellement le long d'une importante partie de l'épissure, tandis qu'au moins une de ces parties extrêmes comporte des parties comprenant des sections des câblés radiaux, découpées dans les zones dans lesquelles la couche de nappes est repliée autour des talons respectifs, les bords extrêmes de la couche de nappes étant en aboutement mutuel dans ces zones.

8. Bandage pneumatique à nappes radiales selon la revendiction 7, dans lequel les largeurs des parties de la partie extrême, qui sont découpées, sont à peu près égales à la largeur du chevauchement entre les parties extrêmes.

9. Bandage pneumatique à nappes radiales selon la revendication 7 ou 8, dans lequel

les parties découpées de cette partie extrême de la nappe s'étendent de la zone dans laquelle la couche de nappes est repliée autour des talons repectifs, jusqu'aux côtés adjacents respectifs de cette couche de nappes.

10. Bandage pneumatique selon la revendication 7 ou 8, dans lequel les deux parties extrêmes comportent des éléments comprenant des sections de câblés radiaux découpés dans les zones dans lesquelles la couche de nappes est repliée autour des talons respectifs pour former une épissure dans les zones dans lesquelles les bords extrêmes de la couche de nappes sont en aboutement mutuel.

FIG. 1

FIG. 2

FIG. 3

FIG. 4